(19) Europäisches Patentamt
European Patent Office
Office européen des brevets

(11) **EP 4 645 974 A1**

(12) **EUROPEAN PATENT APPLICATION**
published in accordance with Art. 153(4) EPC

(43) Date of publication:
**05.11.2025 Bulletin 2025/45**

(21) Application number: **23908846.1**

(22) Date of filing: **17.03.2023**

(51) International Patent Classification (IPC):
**H04W 64/00** (2009.01)    **H04W 24/00** (2009.01)
**H04L 5/00** (2006.01)

(52) Cooperative Patent Classification (CPC):
**H04W 64/00; H04B 7/0617; H04B 17/328;
H04L 5/00; H04W 24/00; H04W 24/10;
H04W 56/0015**

(86) International application number:
**PCT/CN2023/082042**

(87) International publication number:
**WO 2024/138889 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022 CN 202211688224**

(71) Applicant: **Quectel Wireless Solutions Co., Ltd.
Shanghai 201601 (CN)**

(72) Inventors:
• **ZHAO, Zheng
  Shanghai 201601 (CN)**
• **LYU, Ling
  Shanghai 201601 (CN)**
• **YANG, Zhongzhi
  Shanghai 201601 (CN)**

(74) Representative: **Fish & Richardson P.C.
Highlight Business Towers
Mies-van-der-Rohe-Straße 8
80807 München (DE)**

(54) **POSITIONING METHODS AND POSITIONING APPARATUSES**

(57)    The present application provides a positioning method and a positioning apparatus. In the method, a neighboring cell measurement set used for positioning is determined, so that a terminal device reports, within a limited measurement time and resource, a measurement result valid for positioning the terminal device. This is beneficial for improving positioning accuracy. The positioning method includes: sending, by a first communications device, a first neighboring cell measurement set to a terminal device, where a measurement result of the first neighboring cell measurement set is used for positioning the terminal device.

```
┌──────────────┐                    ┌────────────────┐
│    First     │                    │ Terminal device│
│communications│                    │                │
│    device    │                    └───────┬────────┘
└──────┬───────┘                            │
       │   S610: First neighboring cell     │
       │        measurement set             │
       │───────────────────────────────────▶│
       │                                    │
```

FIG. 6

## Description

The present application claims priority to Chinese Patent Application No. 2022116882247, filed with the China National Intellectual Property Administration on December 27, 2022 and entitled "POSITIONING METHOD AND POSITIONING APPARATUS", which is incorporated herein by reference in its entirety.

## TECHNICAL FIELD

The present application relates to the field of communications technologies, and more specifically, to a positioning method and a positioning apparatus.

## BACKGROUND

In a communications system, a terminal device may be positied in multiple manners. For example, the terminal device may be positioned based on a signal measurement result such as a reference signal received power (reference signal received power, RSRP). This positioning manner has advantages of low costs and being easy to be implemented. However, accuracy of positioning performed based on the signal measurement result such as an RSRP is not high, resulting in a relatively large error in positioning the terminal device.

## SUMMARY

Embodiments of the present application provide a positioning method and a positioning apparatus. The following describes various aspects of embodiments of the present application.

According to a first aspect, a positioning method is provided. The positioning method includes: sending, by a first communications device, a first neighboring cell measurement set to a terminal device, where a measurement result of the first neighboring cell measurement set is used for positioning the terminal device.

According to a second aspect, a positioning method is provided. The positioning method includes: receiving, by a terminal device, a first neighboring cell measurement set sent by a first communications device, where a measurement result of the first neighboring cell measurement set is used for positioning the terminal device.

According to a third aspect, a positioning apparatus is provided. The positioning apparatus is a first communications device. The first communications device includes: a sending unit, sending a first neighboring cell measurement set to a terminal device, where a measurement result of the first neighboring cell measurement set is used for positioning the terminal device.

According to a fourth aspect, a positioning apparatus is provided. The positioning apparatus is a terminal device. The terminal device includes: a receiving unit, receiving a first neighboring cell measurement set sent by a first communications device, where a measurement result of the first neighboring cell measurement set is used for positioning the terminal device.

According to a fifth aspect, a communications apparatus is provided, including a memory and a processor, where the memory is configured to store a program, and the processor is configured to invoke the program in the memory to perform the method according to the first aspect or the second aspect.

According to a sixth aspect, an apparatus is provided, including: a processor, invoking a program from a memory to perform the method according to the first aspect or the second aspect.

According to a seventh aspect, a chip is provided, including: a memory and a processor, where the memory stores executable code, and the processor is configured to execute the executable code to implement the method according to the first aspect or the second aspect.

According to an eighth aspect, a computer-readable storage medium is provided. The computer-readable storage medium stores a program that causes a computer to perform the method according to the first aspect or the second aspect.

According to a ninth aspect, a computer program product is provided, including a program that causes a computer to perform the method according to the first aspect or the second aspect.

According to a tenth aspect, a computer program is provided, where the computer program causes a computer to perform the method according to the first aspect or the second aspect.

In embodiments of the present application, a first communications device sends, to a terminal device, a first neighboring cell measurement set used for positioning. The terminal device performs signal measurement and result reporting based on the first neighboring cell measurement set. A positioning requirement is considered in a signal measurement result based on the first neighboring cell measurement set, thereby being beneficial to improving accuracy of positioning the terminal device.

**BRIEF DESCRIPTION OF DRAWINGS**

FIG. 1 shows a wireless communications system to which an embodiment of the present application is applied.

FIG. 2 is a schematic diagram of a structure of a communications system using a related positioning method.

FIG. 3 is a schematic diagram of a location of a base station.

FIG. 4 is a schematic diagram of positioning a terminal device based on a location of a base station.

FIG. 5 is a diagram of comparison between an RSRP change curve and a distance change curve based on a location of a base station.

FIG. 6 is a schematic flowchart of a positioning method according to an embodiment of the present application.

FIG. 7 is a schematic flowchart of a possible implementation according to an embodiment of the present application.

FIG. 8 is a schematic flowchart of another possible implementation according to an embodiment of the present application.

FIG. 9 is a schematic flowchart of still another possible implementation according to an embodiment of the present application.

FIG. 10 is a schematic flowchart of still another possible implementation according to an embodiment of the present application.

FIG. 11 is a schematic diagram of a structure of a positioning apparatus according to an embodiment of the present application.

FIG. 12 is a schematic diagram of a structure of another positioning apparatus according to an embodiment of the present application.

FIG. 13 is a schematic diagram of a structure of a communications apparatus according to an embodiment of the present application.

**DESCRIPTION OF EMBODIMENTS**

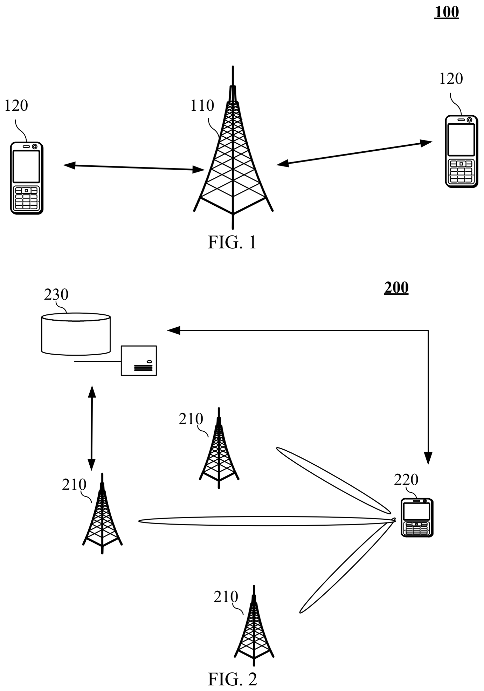

The following clearly and completely describes the technical solutions in embodiments of the present application with reference to the accompanying drawings. Apparently, the described embodiments are only some rather than all of embodiments of the present application. For ease of understanding, the terms and communication processes involved in the present application are first described below with reference to FIG. 1 to FIG. 4.

Communications system

FIG. 1 shows a wireless communications system 100 to which an embodiment of the present application is applicable. The wireless communications system 100 may include a base station 110 and a terminal device 120. The base station 110 may be a device in communication with the terminal device 120. The base station 110 may provide communication coverage for a specific geographic region, and may communicate with the terminal device 120 located within the coverage.

FIG. 1 exemplarily shows one base station and two terminals. Optionally, the wireless communications system 100 may include a plurality of base stations, and another quantity of terminal devices may be included in a coverage range of each base station. This is not limited in embodiments of the present application.

It should be understood that the technical solutions in embodiments of the present application may be applied to various communications systems, for example, a 5th generation (5th-generation, 5G) communications system, a new radio (new radio, NR) system, a long term evolution (long term evolution, LTE) system, an LTE frequency division duplex (frequency division duplex, FDD) system, an LTE time division duplex (time division duplex, TDD) system, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), an advanced long term evolution (advanced long term evolution, LTE-A) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non terrestrial network, NTN) system, a universal mobile telecommunications system (universal mobile telecommunication system, UMTS), a wireless local area network (wireless local area networks, WLAN), wireless fidelity (wireless fidelity, WiFi), or another communications system. The technical solutions provided in the present application may be further applied to a future communications system, such as a 6th generation mobile communications system or a satellite communications system.

The terminal device in the embodiments of the present application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communication device, a user agent, or a user apparatus. The terminal device in the embodiments of the present application may be a device providing a user with voice and/or data connectivity and capable of connecting people, objects, and machines, such as a handheld device or vehicle-mounted device having a wireless connection function. The terminal device in embodiments of the present application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, UE may function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart home device communicate with each other, without relaying a communication signal through a base station.

In embodiments of the present application, the terminal device may be a station (STATION, ST) in a WLAN, or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device, a next-generation communications system such as a terminal device in an NR network, a terminal device in a future evolved public land mobile network (public land mobile network, PLMN), or the like.

The base station in embodiments of the present application may be a device for communicating with the terminal device. The base station may also be referred to as an access network device, a wireless access network device, or a network device. The base station in embodiments of the present application may be a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access piont, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. The base station may be alternatively a communications module, a modem, or a chip that is disposed in the foregoing device or apparatus. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks of the same access technology or different access technologies. A specific technology and a specific device used by the base station are not limited in embodiments of the present application.

The base station may be fixed or mobile. For example, a helicopter or an unmanned aerial vehicle may be configured to function as a mobile base station, and one or more cells may move according to a position of the mobile base station. In another example, a helicopter or an unmanned aerial vehicle may be configured to function as a device in communication with another base station.

In some deployments, the base station in embodiments of the present application may be a CU or a DU, or the base station includes a CU and a DU. The gNB may further include an AAU.

The base station and the terminal device may be deployed on land, including being indoors or outdoors, handheld, or in-vehicle, may be deployed on a water surface, or may be deployed on a plane, a balloon, or a satellite in the air. In embodiments of the present application, scenarios in which the base station and the terminal device are located are not limited.

In embodiments of the present application, the base station may provide a service for a cell, and the terminal device communicates with the base station by using a transmission resource (for example, a frequency domain resource or a spectrum resource) used by the cell. The cell may be a cell corresponding to the base station. The cell may belong to a macro base station or belong to a base station corresponding to a small cell (small cell). The small cell herein may include: a metro cell (metro cell), a micro cell (micro cell), a pico cell (pico cell), a femto cell (femto cell), or the like. These small cells have a small coverage range and a low transmit power, and are suitable for providing a high-rate data transmission service.

In some embodiments of the present application, the wireless communications system shown in FIG. 1 may further include another network entity such as a mobility management entity (mobility management entity, MME) or an access and mobility management function (access and mobility management function, AMF), which is not limited in embodiments of the present application.

It should be understood that all or a part of functions of the communications device in the present application may also be implemented by functions of software running on hardware, or by virtualization functions instantiated on a platform (for example, a cloud platform).

Positioning technology in the communications system

With reference to FIG. 2, a communications system 200 may further include a positioning device 230. The positioning device 230 may be configured to determine location information of a terminal device. The positioning device 230 may be located in a core network. Sometimes, the positioning device 230 may be alternatively referred to as a positioning server. An NR system is used as an example, and the positioning device 230 may be a location management function (location management function, LMF). Another communications system is used as an example, and the positioning device 230 may be a location management unit (location management unit, LMU), a location management center (location management center, LMC), or an evolved serving mobile location center (evolved serving mobile location center, E-SMLC). It may be understood that, the positioning device 230 may be alternatively another network element, node, or device for determining the location information of the terminal device, for example, may be a network element or node in a future communications system for determining the location information of the terminal device. A name of the positioning device is not specifically limited in embodiments of the present application.

Positioning in the communications system 200 includes uplink positioning and downlink positioning. In some communications systems (for example, the NR system), downlink positioning is performed based on a positioning reference signal (positioning reference signal, PRS). The PRS, alternatively referred to as a downlink positioning reference signal (downlink positioning reference signal, DL-PRS), is a reference signal for positioning. For example, in a downlink positioning process, the terminal device 220 may first measure a PRS sent by a serving cell and a neighboring cell (or a neighbor cell), and estimate related information of positioning measurement. Then the terminal device 220 may report the related information of the positioning measurement to the positioning device 230 as a measurement result of the PRS. The positioning device 230 may calculate a location of the terminal device 220 based on the related information that is of the positioning measurement and that is reported by the terminal device 220, to obtain the location information of the terminal device 220. For example, the positioning device 230 may calculate the location information of the terminal device 220 based on a trilateration method or a triangulation method.

In some communications systems (for example, the NR system), uplink positioning is performed based on an SRS. For example, in an uplink positioning process, the terminal device 220 sends a sounding reference signal (sounding reference signal, SRS). The base station 210 (a base station of a serving cell and a base station of a neighboring cell) may obtain a measurement result based on the SRS sent by the terminal. The measurement result of the SRS may include related information of positioning measurement. The base station 210 may then send the related information of the positioning measurement to the positioning device 230. The positioning device 230 may calculate a location of the terminal device 220 based on the related information that is of the positioning measurement and that is reported by the base station 210, to obtain the location information of the terminal device 220. For example, the positioning device 230 may calculate the location information of the terminal device 220 based on a trilateration method or a triangulation method.

The related information of the positioning measurement may include one or more of the following information: time information, distance information, power information, or angle information. More specifically, the related information of the positioning measurement may include one or more of the following information: a time difference of arrival (time difference of arrival, TDOA), an angle difference of arrival (angle difference of arrival, ADOA), an RSRP, and the like.

Various industries have diverse positioning requirements. For example, a large amount of application scenarios such as an internet of vehicles, self-driving, a smart city, smart logistics, an unmanned aerial vehicle, asset tracing, public safety, weather forecasting, and auxiliary navigation, have positioning requirements.

Positioning based on a wireless system may be applied to a scenario in which a satellite positioning system cannot cover, to satisfy various positioning requirements. With development of communications technologies, positioning technologies are gradually standardized. For example, the 5G standardizes positioning from the release 16 (release-16, Rel-16).

In a wireless communications system, a terminal device may be positioned in multiple manners. For example, a signal measurement result may be applied to distance measurement between transmitting and receiving devices, to position the terminal device. Because a signal transmitting device and a signal receiving device are simple and have low costs and low power consumption, positioning based on a signal measurement result is a mainstream positioning mechanism in wireless system positioning. The signal measurement result may include one or more of following: an RSRP, reference signal received quality (reference signal receiving quality, RSRQ), or a signal to interference plus noise ratio (signal to interference plus noise ratio, SINR).

During positioning processing, a path loss from a base station to a terminal device may be determined based on a signal measurement result, and a distance between the base station and the terminal device may calculated based on the path loss, to position the terminal device.

The following uses the RSRP as an example to describe a positioning technology based on a signal measurement result.

The RSRP is a radio frequency signal measurement value, and may be used for measurement of communication link quality, and may also be applied to distance measurement between transmission and reception. Compared with information such as a time of arrival (time of arrival, TOA), a TDOA, and an angle of arrival (angle of arrival, AOA), RSRP information is obtained easily at low costs.

The terminal device usually performs RSRP measurement based on a cell-specific offset list configured by a network. In the cell feature offset list, a cell "blacklist" and a cell "whitelist" are set. The network generally configures these cell lists from the perspective of signal quality and user access. The network selects cells with good signal quality and recommends them to a user for measurement. However, from the following description, it can be learned that a cell with good quality of signals received by the user is not necessarily suitable for positioning.

Distance measurement based on an RSRP mianly includes determining a distance based on energy strength of a received signal. When a wireless signal is transmitted in the air, a signal power attenuates with a propagation distance, and therefore, a distance can be estimated based on a change of the signal power. For example, based on a known signal transmission power and received signal power, a distance between nodes can be calculated by using an attenuation model of a signal and a distance. However, a distance and an obstacle affect signal propagation. Power intensity of the signal attenuates due to these impacts, and thus indirectly affects positioning accuracy.

In the wireless system positioning, an RSRP-based positioning technology is usually used if a positioning accuracy requirement is not high. Compared with TOA-, TDOA-, and AOAbased positioning and global positioning system (global positioning system, GPS), RSRP-based positioning has advantages of low costs, being easy to be implemented, and the like. Further, this positioning technology does not require additional hardware, does not require dedicated positioning communication overheads (for example, a pilot used for positioning), and can further complete analysis and processing of complex information.

In summary, by using a positioning technology based on a signal measurement result, communication consumption and costs can be reduced. The positioning technology is applicable to a positioning system with low costs. However, low positioning accuracy is always a problem limiting application and development of the positioning technology.

As described above, the distance and the obstacle in the signal propagation process cause attenuation of the power intensity of the signal. Therefore, when positioning is performed based on the signal measurement result, a requirement for parameters of a communication channel is relatively high. Accuracy of distance measurement or positioning can be ensured only when the parameters of the channel are accurate. For example, to accurately calculate a distance between a base station of each cell and the terminal device based on the RSRP, topological parameters: a frequency of the base station, a bandwidth, a location, a height, a spatial characteristic, and the like need to be known. When any parameter is inaccurate or cannot be obtained, the distance measurement accuracy is affected.

When the terminal device performs signal measurement, distance measurement based on a signal measurement result cannot accurately reflect a valid distance between the terminal device and the base station, and therefore cannot be used for location calculation. As described above, when the terminal device measures the parameters such as the RSRP based on a cell list configured by a network, the cell list is considered from the perspective of received signal strength and quality. However, for positioning, not only signal quality from the base station to the terminal device is considered, but also the location of the base station is considered. In other words,the RSRP related to the base station being measured by the terminal device cannot satisfy a positioning requirement.

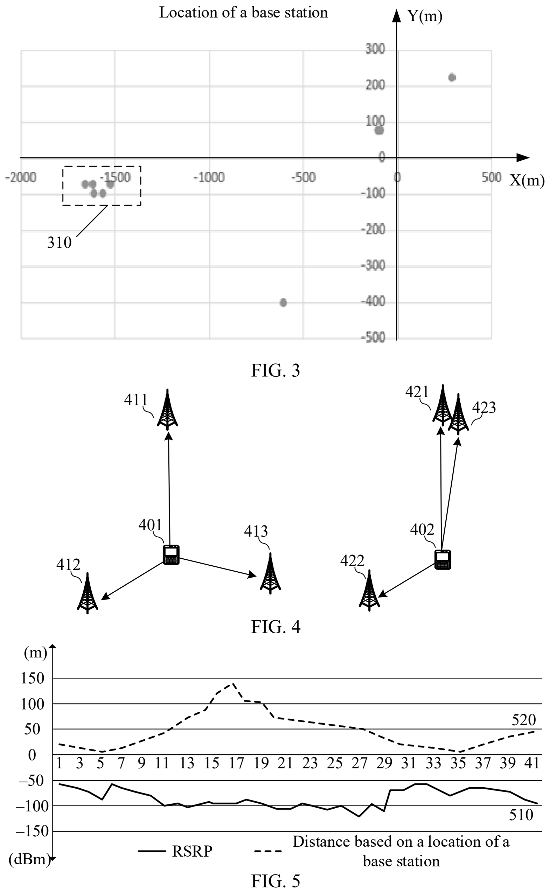

Different positioning algorithms have different adaptability to the location of the base station. For example, downlink positioning of the base station requires at least three base stations with a relatively large distance therebetween to determine a location of the terminal device. However, in an actual network, distances between locations of some base stations are relatively small. These base stations may be co-located base stations or adjacent base stations. FIG. 3 is a schematic diagram of locations of some base stations, where a dot represents a base station. A horizontal coordinate and a vertical coordinate in FIG. 3 respectively represent an x coordinate and a y coordinate of the base station in units of meter. In FIG. 3, there are five base stations with a small distance therebetween in a dashed box 310. For a terminal device near the dashed box 310, the five base stations may all be in a cell "whitelist". However, if the terminal device is positioned based on RSRPs of the five base stations, it is possible that an ideal positioning result cannot be obtained.

For ease of understanding, the following is described with reference to FIG. 4. FIG. 4 shows two different base station location relationships. Three base stations in the left diagram in FIG. 4 are respectively a base station 411, a base station 412, and a base station 413. Distances between the base stations 411 to 413 are relatively large. A terminal device 401 may be positioned in a triangulation manner. Three base stations in the right diagram in FIG. 4 are respectively a base station 421, a base station 422, and a base station 423. As shown in FIG. 4, a distance between the base station 421 and the base station 423 is relatively small. If the triangulation manner is used, positioning effect may be not good. Therefore, when a plurality of base stations are co-located or adjacent to each other, a valid base station is selected to determine a valid positioning algorithm, to obtain a better positioning result.

In addition, in an actual case, a location of a base station in a base station database may be inaccurate. For example, when the base station moves, the base station database is not updated synchronously. Therefore, a location in the database does not match an actual location of the base station. In this case, a distance reflected based on a signal measurement result is inconsistent with a distance determined based on base station location information in the base station database. In other words, a change of a signal measurement result is no longer associated with a distance determined based on a location of a base station. Therefore, the signal measurement result corresponding to the base station cannot be used for positioning of the terminal device.

Description is provided by using a diagram of comparison between an RSRP change curve and a distance change curve based on a location of a base station in FIG. 5 as an example. Horizontal coordinates in FIG. 5 represent terminal devices in different locations within the coverage range of a base station. In FIG. 5, a vertical coordinate in an upper region represents a distance from a terminal device to the base station in units of meters, and a vertical coordinate in a lower region represents a measured RSRP value in units of dBm.

As shown in FIG. 5, a curve 510 shows RSRP mreasurment values measured at different locations when transmit power of the base station remains unchanged, and a curve 520 shows distances between the base station and different locations determined based on the base station location information. In a normal case, an RSRP change when the transmit power remains unchanged can reflect a path loss change. Therefore, a change of the curve 510 should be associated with a distance between a terminal device and the base station. However, association similarity between the curve 510 and the curve 520 in FIG. 5 is extremely low. In other words, in a case that the transmit power remains unchanged, a distance reflected by a measured RSRP is inconsistent with a distance determined based on the base station location information. For a positioning device, if positioning is performed based on a measured RSRP and base station location information in the base station database, there may be a large deviation from an actual location of a terminal device.

In addition, the coverage of the base station is limited because of factors such as a sector feature, directivity, and a limited transmit power of the base station. Therefore, when the terminal device is in different locations of a serving cell, the terminal device may be covered by different base stations in neighboring cells. As shown in FIG. 2, the base station of the serving cell and a plurality of base stations in neighboring cells may position the terminal device. It is assumed that the terminal device can report all detected base stations, and can determine the location of the terminal device based on all detected base stations in neighboring cells. However, both a measurement time and a reporting resource of the terminal device are limited, and a quantity of reported base stations is relatively limited. In other words, due to limitation of the reporting resource and the measurement time, the terminal device does not report all detectable base stations in neighboring cells.

It can be learned from the foregoing description that currently, signal measurement (for example, RSRP measurement) performed by the terminal device is considered from a perspective of received signal strength and quality, without considering a positioning requirement. The terminal device cannot identify whether the plurality of detected base stations in neighboring cells can be used for positioning. With the limited reporting resource and measurement time, a problem shown in FIG. 4 or FIG. 5 may exist in limited base stations, reported by the terminal device, in neighboring cells. In other words, when the terminal device performs signal measurement, distance measurement based on a signal measurement result of each cell cannot accurately reflect a valid distance between the terminal device and the base station, and therefore cannot be used for location calculation.

It is possible that most base stations reported by the terminal device cannot be used for positioning, which affects positioning accuracy of the terminal device.

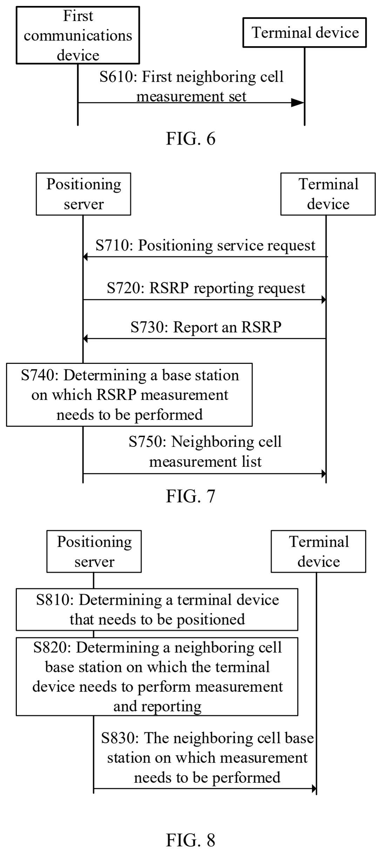

On this basis, an embodiment of the present application provides a positioning method. In the positioning method, a first communications device determines a neighboring cell measurement list used for positioning, and positioning based on a signal measurement result is systematically designed and standardized, thereby, imporving positioning accuracy and system efficiency without increasing a service delay. With reference to FIG. 6, the following describes in detail the positioning method provided in embodiments of the present application.

The method shown in FIG. 6 is described from a perspective of interaction between a first communications device and a terminal device.

The first communications device may be a communications device that performs positioning on the terminal device, or may be a communications device that assists positioning of the terminal device. In some embodiments, the first communications device may be a positioning server, such as an LMF. A location calculation unit of the positioning server may position the terminal device, or may send positioning-related information to the terminal device or a base station. In some embodiments, the first communications device may be a base station, for example, a base station of a serving cell in which the terminal device is located. The base station may position the terminal device or assist positioning of the terminal device by communicating with the positioning server and the terminal device. In some embodiments, the first communications device may be another communications device that can obtain location information of a neighboring cell base station. These communications devices may determine, based on the location information of the neighboring cell base station, a list of neighboring cells that participate in positioning of the terminal device.

The first communications device and the terminal device may communicate with each other, or may separately communicate with another communications device. In some embodiments, when the first communications device is a positioning server, the first communications device may communicate with the terminal device according to the LTE positioning protocol (LTE positioning protocol, LPP), or may communicate with the base station of the serving cell and the base station of the neighboring cell according to the NR positioning protocol a (NR positioning protocol a, NRPPa). In some embodiments, when the first communications device is the base station of the serving cell in which the terminal device is located, the terminal device may directly communicate with the base station. Alternatively, the base station and the terminal device may separately communicate with the positioning server.

The terminal device may be any to-be-detected device that needs to be positioned. In some embodiments, the terminal device may be a device that needs to be positioned in the plurality of application scenarios mentioned above. In some embodiments, the terminal device may be alternatively a device that needs to be positioned in a scenario in which a satellite positioning system cannot cover.

In a possible implementation, the first communications device may interact with the terminal device after determining the terminal device that needs to be positioned. For example, the first communications device may determine, based on a positioning service request sent by a terminal device, a terminal device that needs to be positioned, and communicate with the terminal device. For example, the first communications device may determine, based on a positioning service request sent by the base station or an AMF, a terminal device that needs to be positioned.

With reference to FIG. 6, in step S610, the first communications device sends a first neighboring cell measurement set to the terminal device. A measurement result of the first neighboring cell measurement set is used for positioning the terminal device.

The first neighboring cell measurement set may be a set of communications devices for performing positioning measurement by the terminal device. In some embodiments, the first neighboring cell measurement set may be a first neighboring cell measurement list determined by the first communications device. For example, the first neighboring cell measurement set may be a cell-specific offset list used for positioning. In some embodiments, the first neighboring cell measurement set may be a set of a plurality of communications devices directly indicated by the first communications device to the terminal device.

A communications device for performing positioning measurement for the terminal device may be referred to as a second communications device. In some embodiments, the second communications device may include a device corresponding to the terminal device, such as a neighboring cell base station, a transmitting and receiving point (transmission and receiving point, TRP) configured for transmission and reception, or a roadside unit. Signal measurement performed by the terminal device on these devices may be used for positioning. These devices may also be referred to as positioning reference devices. In some embodiments, the second communications device may further include a base station of a serving cell in which the terminal device is located, and related information of the base station is also used for positioning of the terminal device.

The first neighboring cell measurement set may include a plurality of types of information of the second communications device. The plurality of types of information may be related to positioning of the terminal device, for example, a device ID, a measurement requirement of the terminal device, transmission information, and related information of a pilot signal.

In some embodiments, the first neighboring cell measurement set may include identity (identity, ID) information of the second communications device, for example, a neighboring cell base station ID, a TRP ID, and a roadside unit ID. The terminal device may directly determine, based on the ID information in the neighboring cell measurement set, a device for performing positioning measurement. Specifically, the terminal device may perform signal measurement on the corresponding second communications device based on the ID information of the second communications device, to position the terminal device.

In some embodiments, the first neighboring cell measurement set may include a signal measurement quantity that needs to be measured by the terminal device. The signal measurement quantity in the first neighboring cell measurement set is used to indicate a parameter type of measurement and reporting performed by the terminal device.

In some embodiments, the first neighboring cell measurement set may include information related to transmission between the second communications device and the terminal device. The terminal device may determine, based on the information, the second communications device that participates in positioning of the terminal device and a relative direction between the terminal device and the second communications device device. For example, the first neighboring cell measurement set may include a synchronization signal block (synchronization signal block, SSB) sequence number of the second communications device. The synchronization signal block is a synchronization signal/physical broadcast channel (synchronization signal/physical broadcast channel, SSS/PBCH). The SSB sequence number may also be referred to as an SSB index. A location relationship between the terminal device and the second communications device may be determined based on the SSB sequence number. For example, the first neighboring cell measurement set may include a beam direction of the terminal device relative to the second communications device. The terminal device may determine the location relationship with the second communications device based on the beam direction. For example, the first neighboring cell measurement set may include a beam direction of the second communications device relative to the terminal device. The beam direction may be a transmit beam direction or a receive beam direction relative to the terminal device.

In some embodiments, the first neighboring cell measurement set may include related information of a pilot signal that needs to be measured by the second communications device. The terminal device may determine, based on the indication information, how to perform signal measurement. For example, the first neighboring cell measurement set may include information of the pilot signal that needs to be measured by the second communications device, such as a working frequency, a bandwidth, a sending time, or a sending start time instant. The sending time of the pilot signal may include a sending start time instant and a sending duration.

The signal measurement quantity of the terminal device may include the foregoing RSRP, and may further include a plurality of parameters related to signal quality, such as a single-path RSRP on a single path or a received signal strength indicator (received signal strength indication, RSSI). This is not limited herein. The signal measurement quantity may be alternatively a measured value corresponding to the foregoing parameter.

A plurality of second communications devices in the first neighboring cell measurement set may satisfy a positioning requirement of the terminal device, or may be used by the first communications device to determine positioning-related information. In some embodiments, locations of the plurality of second communications devices should satisfy a specific relationship. Taking a plurality of neighboring cell base stations as an example, distances between the plurality of neighboring cell base stations should satisfy a specific requirement. For example, when a multi-base station downlink positioning algorithm is used, a plurality of neighboring cell base stations that participate in location calculation need to be spaced by a specific distance. In a possible implementation, to obtain directional information of each base station, the first communications device needs to obtain a signal measurement result of a co-site base station relative to the same terminal device. For example, when the first communications device is a positioning server, the positioning server may instruct, by using the first neighboring cell measurement set, the terminal device to perform RSRP measurement of a plurality of co-site base stations.

The first neighboring cell measurement set may be directly determined by the first communications device, or may be notified to the first communications device after being determined by another communications device. In some embodiments, when the first communications device is a positioning server, the positioning server may obtain location information of a plurality of neighboring cell base stations, TRPs, and roadside units, and directly determine the first neighboring cell measurement set based on the information. In some embodiments, when the first communications device is the base station of the serving cell in which the terminal device is located, the base station does not have complete information of a neighboring cell, and therefore does not know a neighboring cell that needs to be measured by the terminal device in a coverage. The first communications device may receive a notification from the positioning server, or the first communications device may receive a notification sent by the positioning server by using the NRPPa protocol. The notification is used to indicate the first neighboring cell measurement set. For example, the positioning server may notify the base station of a neighboring cell on which RSRP measurement needs to be performed by the terminal device in the coverage of the base station for positioning. In some embodiments, the positioning server may further send the first neighboring cell measurement set to the terminal device based on a request of the terminal device.

In a possible implementation, the first communications device is a positioning server. Before step S610 is performed, the positioning server may further receive a first neighboring cell measurement set request sent by the terminal device. Alternatively, the positioning server may further receive a first neighboring cell measurement set request sent by the base station, and send the first neighboring cell measurement set to the base station.

In a possible implementation, the first communications device is a base station. Before step S610 is performed, the base station may further receive a first neighboring cell measurement set request sent by the terminal device. Alternatively, the base station may send a first neighboring cell measurement set request to the positioning server, and receive the first neighboring cell measurement set sent by the positioning server.

The first neighboring cell measurement set may be determined in a plurality of manners. In some embodiments, the first neighboring cell measurement set may be determined based on an approximate location of the terminal device. The approximate location of the terminal device may be determined based on information related to the location of the terminal device. The information may be referred to as first location measurement information of the terminal device. In some embodiments, the first neighboring cell measurement set may be alternatively determined by using the serving cell in which the terminal device is located.

In some embodiments, the first neighboring cell measurement set may be determined based on the first location measurement information of the terminal device. The first location measurement information of the terminal device may be directly related to the location of the terminal device, or may be used for determining the approximate location of the terminal device. In some cases, the first communications device may not know the entire first location measurement information of the terminal device, or know only a part of the information. As a result, the first neighboring cell measurement set cannot be determined. In some embodiments, before determining the first neighboring cell measurement set, the first communications device may request the terminal device to report the information, or may directly receive the first location measurement information reported by the terminal device.

In a possible implementation, the first communications device is a positioning server. Before step S610 is performed, the positioning server may obtain the first location measurement information request of the terminal device in a plurality of manners. For example, the positioning server may send the first location measurement information request of the terminal device to the base station or the terminal device. For example, the positioning server may alternatively receive the first location measurement information that is of the terminal device and that is reported by the terminal device or the base station, and determine the first neighboring cell measurement set based on the received first location measurement information.

In a possible implementation, the first communications device is a base station. Before step S610 is performed, the base station may also obtain the first location measurement information request of the terminal device in a plurality of manners. For example, the base station may send the first location measurement information request of the terminal device to the terminal device or the positioning server. For example, the base station may alternatively receive the first location measurement information that is of the terminal device and that is reported by the terminal device or sent by the positioning server, and determine the first neighboring cell measurement set based on the received first location measurement information. The first location measurement information sent by the positioning server may include location information related to a neighboring cell base station.

The first location measurement information may include location information of a plurality of terminal devices and determining information of the plurality of terminal devices. The information for determining the location of the terminal device is, for example, related parameters of the plurality of second communications devices corresponding to the terminal device, the signal measurement quantity corresponding to the terminal device, or a communication parameter corresponding to the terminal device. The location information of the terminal device may include coarse positioning information such as the approximate direction and a range of the terminal device. The location information of the terminal device may further include reference positioning information of the terminal device, that is, reference location information of the terminal device. The reference location information may be obtained by the terminal device by using another positioning system, or may be location information previously obtained by the terminal device. The reference location information may be beneficial for the positioning server to determine parameters such as a fitting model and reliability of a location of a base station, so as to determine the first neighboring cell measurement set.

In a possible implementation, the first location measurement information may include parameters of the plurality of second communications devices corresponding to the terminal device. The second communications devices may include the base station of the serving cell in which the terminal device is located, a neighboring cell base station, a TRP, and a roadside unit. Parameters of the second communications device may include location parameters such as a device location and a device height, or may include channel communication parameters such as a working frequency, a bandwidth, and a spatial characteristic. For example, after determining the positioning requirement based on the positioning service request of the terminal device, the positioning server may determine, based on location parameters of the plurality of neighboring cell base stations in the first location measurement information, a base station on which measurement needs to be performed, that is, the first neighboring cell measurement set.

In a possible implementation, the first location measurement information may include a communication parameter related to the terminal device, for example, an SSB sequence number and a timing advance (timing advance, TA) corresponding to the communications device. The first communications device may determine the approximate location of the terminal device based on these communications parameters, to determine the first neighboring cell measurement set corresponding to the terminal device. Description is made below with reference to first location information of the terminal device.

In a possible implementation, the first location measurement information may include the signal measurement quantity corresponding to the terminal device. The first communications device may also determine, based on the signal measurement quantity, the second communications device corresponding to the terminal device and the related information, to determine the first neighboring cell measurement set.

In a possible implementation, the first location measurement information may include the coarse positioning information of the terminal device. The coarse positioning information may also be referred to as the first location information (a coarse location) of the terminal device, and is used to indicate an approximate direction or an approximate range of the terminal device relative to the second communications device. It may be learned from the foregoing that when the terminal device is located in different locations of the serving cell, the terminal device may be covered by different neighboring cell base stations (the second communications devices). A zone range of the serving cell in which the terminal device is located may be determined based on the coarse location of the terminal device. A corresponding first neighboring cell measurement set may be determined based on the zone range. For example, when the first communications device is a base station, the base station may perform coarse positioning on the terminal device, that is, determine the first location information of the terminal device. A manner of determining the first location information is described in detail below.

In a possible implementation, the first location measurement information may include the reference positioning information of the terminal device, and the reference positioning information may be used for determining reliability of the location of the base station. The location information may be obtained by the terminal device by using another positioning system, or may be location information previously obtained by the terminal device. The reference location information may be beneficial for the positioning server to determine parameters such as a fitting model and reliability of a location of a base station, so as to determine the first neighboring cell measurement set. It should be noted that the foregoing base station whose location reliability needs to be determined may be a neighboring cell base station, or may be another second communications device that participates in positioning of the terminal device.

For example, for a mobile base station, the first communications device may not know whether a location of the base station changes. The first communications device may determine, based on reference positioning information of one or more terminal devices, reliability of a location of a base station corresponding to the first communications device. The one or more terminal devices may be M terminal devices, where $M \geq 1$. The reference positioning information of the M terminal devices may include the reference location of the terminal device in the first location measurement information. When reference locations of the M terminal devices and a location of a base station corresponding to the M terminal devices satisfy a first condition, it may be determined that the location of the base station is valid. If the first condition is not satisfied, it is determined that the location of the base station is invalid and needs to be updated. A reference location of a terminal device n $(1 \leq n \leq M)$ may be $(x_n, y_n)$, and a location of a corresponding base station may be $(u, v)$.

For example, the first condition may be a formula related to a preset threshold c. The preset threshold c may be a fixed value, or may be a value dynamically adjusted according to a positioning requirement. To be specific, when the reference locations of the M terminal devices and the location of the corresponding base station satisfy the following formula, it is determined that the location of the base station is valid; or otherwise, it is deermined that the location of the base station is invalid.

$$\frac{\sum_{n=1}^{M}\left(\sqrt{\left(x_n - u\right)^2 + \left(y_n - v\right)^2} \, 10^{\frac{P_n - P_{ref}}{20N}}\right)}{\sqrt{\left\{\sum_{n=1}^{M}\left[\left(x_n - u\right)^2 + \left(y_n - v\right)^2\right]\right\}\left\{\sum_{n=1}^{M}\left(10^{\frac{p_n - P_{ref}}{10N}}\right)\right\}}} > c;$$

or

$$\frac{\sum_{n=1}^{M}\left(\sqrt{\left(x_n - u\right)^2 + \left(y_n - v\right)^2} \, 10^{\frac{P_n - P_{ref}}{20N}}\right)}{\sqrt{\left\{\sum_{n=1}^{M}\left[\left(x_n - u\right)^2 + \left(y_n - v\right)^2\right]\right\}\left\{\sum_{n=1}^{M}\left(10^{\frac{p_n - P_{ref}}{10N}}\right)\right\}}} \geq c,$$

where

$(x_n, y_n)$ represents a reference location of a terminal device n, n is an integer from 1 to M, $(u, v)$ represents a location of the base station, $P_n$ represents a measured path loss from the terminal device n to the base station, $P_{ref}$ represents a reference path loss of one meter, N represents a fitting factor, and c represents a preset threshold. A value range of c may be $0 < c \leq 1$.

As mentioned above, the first communications device needs to determine the reliability of the location of the base station. When the first location measurement information is associated with the location of the base station, the latest location of the base station needs to be determined to accurately position the terminal device. When the location of the base station needs to be updated, the first communications device may update the location of the base station by sending an update request. For example, when the first communications device is a positioning server, the positioning server updates the location of the base station in a following manner. The positioning server may send a base station location update request to the base station or a network side. The positioning server may receive a base station location updated by the base station or the network side. In a possible implementation, the terminal device or an auxiliary positioning device may need to update the location of the base station. The terminal device or the auxiliary positioning device may send a base station location update request to the base station or the network side, and receive a base station location updated by the base station or the network side.

In some embodiments, the first neighboring cell measurement set may be alternatively determined by using the serving cell in which the terminal device is located. For example, the positioning server may first determine, based on the serving cell corresponding to the terminal device, a plurality of neighboring cells corresponding to the terminal device. Then, the positioning server may determine, based on location parameters of these neighboring cells, neighboring cell base stations on which the terminal device needs to perform measurement, to determine the first neighboring cell measurement set.

In a possible implementation, the first neighboring cell measurement set may include a plurality of second neighboring cell measurement sets. The serving cell may include a plurality of different sub-zones. Because different sub-zones of the serving cell may be covered by different neighboring cell base stations, the first neighboring cell measurement set determined based on the serving cell may include second communications devices that need to be measured by terminal devices in all the sub-zones, and and related information of the second communications devices. The first neighboring cell measurement set may be a first neighboring cell measurement list that includes all the second communications devices, or may be a plurality of second neighboring cell measurement sets that are obtained through division in different manners. Description is made below in detail with reference to embodiments.

In some embodiments, the first neighboring cell measurement set may be alternatively determined based on information of a second communications device that is reported for a relatively large quantity of times in the serving cell in which the terminal device is located. In other words, the first communications device may determine the first neighboring cell measurement set based on a reporting status of another device in the serving cell in which the terminal device is located. For example, after determining, based on the RSRP measurement value reported by the terminal device, the serving cell corresponding to the terminal device, the positioning server may determine a neighboring cell base station that is reported by the terminal device in the serving cell for a relatively large quantity of times, and then add the neighboring cell base station to the first neighboring cell measurement set.

In some embodiments, the first neighboring cell measurement set may be determined based on a plurality of types of the foregoing information. For example, the first communications device may determine a plurality of neighboring cell measurement sets based on the serving cell in which the terminal device is located, and then determine, based on the first location measurement information of the terminal device, a neighboring cell measurement set corresponding to the terminal device.

The first communications device sending the first neighboring cell measurement set to the terminal device may include that the first communications device directly sends the first neighboring cell measurement set to the terminal device, or may include that the first communications device indicates the first neighboring cell measurement set to the terminal device in another manner. For example, when the first communications device is a positioning server, the first communications device may send the first neighboring cell measurement set to the terminal device by using LPP signalling. For example, when the first communications device is the base station of the serving cell in which the terminal device is located, the first communications device may notify the terminal device of the first neighboring cell measurement set through broadcasting, or may notify the terminal device of the first neighboring cell measurement set by using radio resource control (radio resource control, RRC) signalling.

The measurement result of the first neighboring cell measurement set is used for positioning the terminal device. The measurement result indicates the foregoing signal measurement performed on a base station in the first neighboring cell measurement set. The signal measurement result is mainly used for positioning the terminal device. In other words, the first neighboring cell measurement set is a measurement set used for positioning the terminal device. Parameters required for positioning need to be considered during determining of the first neighboring cell measurement set.

In some embodiments, the signal measurement result for positioning the terminal device may include a measurement result of the base station of the serving cell in which the terminal device is located and a measurement result of a neighboring cell base station. For example, the first communications device may locate the terminal device based on RSRP measurement values of the serving cell and the neighboring cell.

The first communications device and the terminal device may start communication with each other by using a positioning service request. The positioning service request may be a positioning service request sent by the terminal device, or may be a positioning service request sent by the network side. The network side may include a base station, or may include a functional unit of a core network, such as an AMF.

In some embodiments, the first communications device may perform step S610 after receiving the positioning service request sent by the network side or the terminal device. In some embodiments, after receiving the positioning service request sent by the network side or the terminal device, the first communications device may first send the first location measurement information request or receive the first location measurement information request, and then perform step S610.

In a possible implementation, when the first communications device is a positioning server, the positioning server may send the first location measurement information request of the terminal device to the base station and/or the terminal device, after receiving the positioning service request sent by the network side or the terminal device.

It can be learned from the foregoing that the positioning method shown in FIG. 6 is a solution for implementing valid signal measurement. No delay is caused because signal measurement does not require other communication. Therefore, in the positioning method, positioning accuracy is improved by ensuring validity of neighboring cell signal measurement of the terminal device without adding a positioning delay.

As mentioned above, the first neighboring cell measurement set may be determined based on the first location measurement information of the terminal device. The first location measurement information may include the determined approximate location (the first location information) of the terminal device. The first location information may include direction information of the terminal device, may include range information of the terminal device, and may further include distance or angle information of the terminal device relative to the plurality of second communications devices.

The first location information may be determined based on one or more types of information. The information may be a related parameter for connection or communication performed between the terminal device and the base station, or may be known location information related to the terminal device. For example, the related parameter is the TA corresponding to the terminal device.

In some embodiments, the first location information may be based on an SSB sequence number corresponding to the terminal device. For example, in NR, the terminal device reports the measured SSB sequence number. The sequence number may reflect a direction of the terminal device relative to the base station, that is, the first location information of the terminal device. The first communications device may determine, based on information of the SSB sequence number, the direction of the terminal device and a neighboring cell from which the terminal device can receive a signal.

In some embodiments, the first location information may be determined based on a signal measurement result corresponding to the terminal device. The terminal device perfomrs signal measurement periodically. The first communications device may determine an approximate range of the terminal device by obtaining measurement information of the terminal device. The first communications device may determine, based on the first location information, a neighboring cell that needs to be measured by the terminal device. For example, the positioning server may obtain RSRP measurement information of the terminal device. The positioning server determines an approximate range of a user based on the information, to determine a neighboring cell that needs to be measure by the user.

In some embodiments, the first location information may be determined based on the TA corresponding to the terminal device. For example, when the first communications device is a positioning server, the TA corresponding to the terminal device may be requested. The first location information of the terminal device may be obtained based on the corresponding TA.

In some embodiments, the first location information may be determined based on the coarse location of the terminal device. The first location information may be location information obtained by the first communications device in another manner. For example, when the first communications device is a positioning server, the first location information may be determined through coarse positioning performed by the base station on the terminal device. For example, the first communications device may determine the approximate location of the terminal device by using a third-party service organization.

In some embodiments, the first location information may be determined based on the foregoing plurality of types of information. For example, the first communications device may determine an approximate direction of the terminal device based on the SSB sequence number corresponding to the terminal device, determine an approximate distance of the terminal device based on the RSRP measurement value of the terminal device, and then determine the first location information of the terminal device with reference to the approximate direction and the approximate distance of the terminal device.

It can be learned from the foregoing that base stations from which reception can be performed at different locations of the serving cell are different. To perform valid measurement, if the first communications device knows the approximate location of the terminal device, a neighboring cell base station or another second communications device that the user needs to measure can be more accurately determined. However, when the first communications device is a positioning server, the positioning server does not receive information such as the RSRP or the TA reported by the terminal device. The positioning server needs to determine the first location information of the terminal device in another manner.

In some embodiments, the positioning server may determine the approximate location of the terminal device by requesting the signal measurement result from the base station or the terminal device. Then, the positioning server determines the first neighboring cell measurement set based on the location of the terminal device, and sends the first neighboring cell measurement set to the terminal device. For example, the signal measurement result is an RSRP, and the positioning server may request the base station or the terminal device to report the previously measured RSRP. Based on information of the RSRP, the positioning server may determine a list of neighboring cells on which the terminal device needs to perform neighboring cell measurement. To be specific, when the first communications device is a positioning server, the first communications device may send an RSRP reporting request to the terminal device. The first communications device may alternatively determine the first neighboring cell measurement set based on the received RSRP.

For ease of understanding, the following describes a procedure of this manner with reference to FIG. 7 by using an example in which the positioning server requests the RSRP from the terminal device. FIG. 7 is a schematic flowchart of a possible implementation of the positioning method shown in FIG. 6.

With reference to FIG. 7, in step S710, a positioning server receives a positioning service request sent by a terminal device (or a base station).

In step S720, the positioning server sends a capability and an RSRP reporting request to the terminal device.

In step S730, the positioning server receives an RSRP reported by the terminal device.

In step S740, the positioning server determines a base station on which RSRP measurement needs to be performed. The positioning server determines, based on the received RSRP, a neighboring cell from which reception can be performed by the terminal device, to determine RSRP measurement performed by the terminal device for positioning.

In step S750, the positioning server sends, to the terminal device, a list of neighboring cells on which RSRP measurement needs to be performed.

With reference to FIG. 7, the foregoing describes the method for determining a first neighboring cell measurement set based on first location measurement information of a terminal device. In this method, a second communications device included in the first neighboring cell measurement set takes an approximate location of the terminal device into consideration, to ensure that the terminal device performs more valid measurement. In other words, different terminal devices may correspond to different first neighboring cell measurement sets. After positioning is performed by using the second communications device in the first neighboring cell measurement set, the terminal device can be positioned more accurately.

However, in some cases, the first communications device cannot determine a specific location of the terminal device. When the first communications device cannot determine the specific location of the terminal device, the first neighboring cell measurement set sent by the first communications device to the terminal device may include all second communications devices on which positioning measurement needs to be performed in a serving cell. For example, the positioning server may determine a neighboring cell base station on which positioning measurement needs to be performed in the serving cell, and then notify the serving cell of a list of neighboring cells on which positioning measurement needs to be performed.

For the terminal device, a quantity of second communications devices on which positioning measurement needs to be performed in the serving cell is relatively large. Due to limitation of a measurement time, the terminal device needs to select an appropriate device for measurement.

In some embodiments, to-be-detected second communications devices in the first neighboring cell measurement set may be grouped, and the terminal device may determine, based on a group number, a device on which measurement needs to be performed. In a possible implementation, a group number of the terminal device may be notified by the positioning server or the base station. In another possible implementation, the terminal device may select, from a group based on a detected second communications device, a second communications device that needs to be detected.

In some embodiments, the first neighboring cell measurement set determined based on the serving cell may include a plurality of candidate sets. As mentioned above, when the first neighboring cell measurement set is determined based on the serving cell in which the terminal device is located, the first neighboring cell measurement set may include a plurality of second neighboring cell measurement sets. For example, the neighboring cell measurement list determined by the base station for positioning may include a plurality of candidate tables. The terminal device selects a list from the candidate tables based on a location of the terminal device, to perform positioning measurement. For another example, if base stations on which RSRP measurement has been performed by the terminal device include first several (for example, first two) base stations in a specific candidate table, the candidate table may function as a neighboring cell list for positioning measurement.

In some embodiments, the plurality of second neighboring cell measurement sets may be associated with different information of the serving cell. The information may be used for determining a second neighboring cell measurement set corresponding to the terminal device in the plurality of second neighboring cell measurement sets, and is also referred to as positioning association information. The positioning association information may include one or more of the following: an SSB sequence number, a signal measurement quantity corresponding to the serving cell, an angle of arrival measured by a base station of the serving cell, a sub-zone of the serving cell, or a TA measured by a base station of the serving cell.

In a possible implementation, the plurality of second neighboring cell measurement sets may be associated with sub-zones of the serving cell. The plurality of sub-zones of the serving cell respectively correspond to different coverage. The second communications devices in the first neighboring cell measurement set may be grouped based on range information or ID information of the sub-zones, to obtain the plurality of second neighboring cell measurement sets. For example, in a sidelink communications system, the sub-zone of the serving cell has a corresponding zone identity (zone ID). When the first neighboring cell measurement sets are grouped based on IDs, different IDs may respectively correspond to different second neighboring cell measurement sets, or may correspond to the same second neighboring cell measurement set. For example, the plurality of sub-zones in the serving cell may correspond to one second neighboring cell measurement set. The base station or the terminal device may determine, from the plurality of second neighboring cell measurement sets and based on a sub-zone in which the terminal device is located, a second neighboring cell measurement set for positioning.

In a possible implementation, the plurality of second neighboring cell measurement sets may be associated with different parameters of other positioning association information. As described above, the first neighboring cell measurement set may include a plurality of types of information. Communications devices in the first neighboring cell measurement set may be grouped based on information associated with positioning, to obtain the plurality of second neighboring cell measurement sets. The terminal device may select different second neighboring cell measurement sets based on different parameters of the information. The positioning association information may include parameters such as an SSB sequence number, a signal measurement quantity corresponding to the serving cell, angle information measured by the base station of the serving cell, and the TA measured by the base station of the serving cell. Different parameters of the positioning association information indicate specific values of the positioning association information, and may be used by the terminal device to perform selection from the plurality of second neighboring cell measurement sets. Different parameters may correspond to different second neighboring cell measurement sets.

For example, the plurality of second neighboring cell measurement sets may be associated with SSB sequence numbers. The terminal device may select, based on a measured SSB sequence number value, the second neighboring cell measurement set for positioning.

For example, the signal measurement quantity may be a RSRP measurement value, and the plurality of second neighboring cell measurement sets may be associated with RSRP values of corresponding serving cells. The terminal device may select, based on the RSRP measurement value, the second neighboring cell measurement set for positioning.

For example, the angle information may be an AOA. The plurality of second neighboring cell measurement sets may be associated with AOAs measured by the base station. The second neighboring cell measurement set for positioning may be selected based on a measured value of the AOA.

For example, the plurality of second neighboring cell measurement sets may be associated with TAs measured by the base station. The terminal device may select, based on a measured TA value, the second neighboring cell measurement set for positioning.

In a possible implementation, the terminal device may select the corresponding second neighboring cell measurement set from the plurality of second neighboring cell measurement sets based on the foregoing one or more types of positioning association information. The terminal device may further perform signal measurement on some or all second communications devices in the second neighboring cell measurement set. The second communications devices include the foregoing neighboring cell base station, the TRP, and the roadside unit.

With reference to FIG. 6 and FIG. 7, the foregoing describes the positioning method for providing a first neighboring cell measurement set for positioning to a terminal device, to ensure measurement validity. The RSRP is used as an example. In this embodiment of the present application, RSRP measurement is optimized for positioning, so that a measured RSRP can accurately reflect distance information. Therefore, the measured RSRP can be validly used for distance measurement and location calculation, thereby obtaining accurate location information.

To describe the present application more clearly, with reference to FIG. 8 to FIG. 10, the following describes a plurality of possible implementations in the present application in detail by using an example in which signal measurement is RSRP measurement. A dashed line indicates that the process is optional.

FIG. 8 shows an implementation that a positioning server notifies a terminal device of a base station on which RSRP measurement and reporting can be performed. In other words, a first communications device is the positioning server. FIG. 8 is described from a perspective of interaction between the positioning server and the terminal device.

With reference to FIG. 8, in step S810, the positioning server determines the terminal device that needs to be positioned.

In step S820, the positioning server determines a neighboring cell base station on which the terminal device needs to perform measurement and reporting.

In step S830, the positioning server notifies the terminal device of the neighboring cell base station on which measurement needs to be performed. In other words, the positioning server notifies the terminal device of a first neighboring cell measurement set on which measurement needs to be performed.

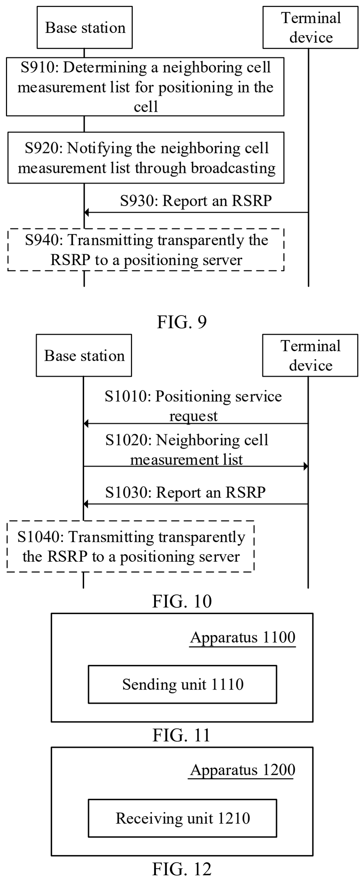

FIG. 9 shows an implementation that a base station broadcasts a base station on which RSRP measurement and reporting can be performed. A first communications device is a base station of a serving cell in which a terminal device is located. FIG. 9 is described from a perspective of interaction between the base station and the terminal device.

With reference to FIG. 9, in step S910, the base station determines a neighboring cell measurement list for positioning in the cell, that is, the first neighboring cell measurement list. As mentioned above, the first neighboring cell measurement set may include a plurality of second neighboring cell measurement sets. The plurality of second neighboring cell measurement sets are a plurality of candidate tables included in the neighboring cell measurement list in FIG. 9.

In step S920, the base station notifies, through broadcasting, the terminal device of the neighboring cell measurement list for positioning. The terminal device may select, from the plurality of candidate tables and based on a location of the terminal device, a measurement list for positioning.

In step S930, the base station receives an RSRP for positioning measurement performed by the terminal device.

In step S940, the base station may transmit transparently the RSRP obtained in step S930 to a positioning server. The positioning server may position the terminal device based on the received RSRP.

FIG. 10 shows an implementation that a base station notifies a base station on which RSRP measurement and reporting can be performed. A first communications device is a base station of a serving cell in which a terminal device is located. FIG. 10 is described still from a perspective of interaction between the base station and the terminal device.

With reference to FIG. 10, in step S1010, the base station receives a positioning service request of the terminal device.

In step S1020, the base station sends a neighboring cell measurement list for positioning to the terminal device, that is, a first neighboring cell measurement set. The base station may determine, through coarse positioning, a neighboring cell on which positioning measurement needs to be performed by the terminal device.

In step S1030, the base station receives an RSRP for positioning measurement performed by the terminal device.

In step S1040, the base station may transmit transparently the RSRP obtained in step S1030 to a positioning server. The positioning server may position the terminal device based on the received RSRP.

The foregoing describes the method embodiments of the present application in detail with reference to FIG. 6 to FIG. 10. The apparatus embodiments of the present application are described in detail below with reference to FIG. 11 to FIG. 13. It should be understood that the description of the apparatus embodiments corresponds to the description of the method embodiments. Therefore, for parts that are not described in detail, reference may be made to the foregoing method embodiments.

FIG. 11 is a schematic block diagram of a positioning apparatus according to an embodiment of the present application. The positioning apparatus may be the first communications device described above. The first communications device may be any positioning server described above, a base station, or another communications device that can obtain neighboring cell base station information. The apparatus 1100 shown in FIG. 11 includes a sending unit 1110.

The sending unit 1110 may be configured to send a first neighboring cell measurement set to a terminal device, where a measurement result of the first neighboring cell measurement set is used for positioning the terminal device.

Optionally, the first communications device is a positioning server, and the sending unit 1110 is further configured to send a request for obtaining a first location measurement information to a base station and/or the terminal device, where the first location measurement information is used for determining the first neighboring cell measurement set; and/or the apparatus 1100 further includes: a receiving unit, receiving first location measurement information of the terminal device, reported by the terminal device or a base station; and the apparatus 1100 further includes: a determining unit, determining the first neighboring cell measurement set based on the received first location measurement information.

Optionally, the first communications device is a base station, and the sending unit 1110 is further configured to send a request for obtaining first location measurement information to the terminal device or a positioning server, where the first location measurement information is used for determining the first neighboring cell measurement set; and/or the receiving unit is further configured to receive first location measurement information of the terminal device, reported by the terminal device or sent by a positioning server; and the determining unit is further configured to determine the first neighboring cell measurement set based on the received first location measurement information.

Optionally, the first communications device is a positioning server, and the receiving unit is further configured to receive a first neighboring cell measurement set request sent by the terminal device; or the receiving unit is further configured to receive a first neighboring cell measurement set request sent by a base station; and the sending unit 1110 is further configured to send the first neighboring cell measurement set to the base station.

Optionally, the first communications device is a base station, and the receiving unit is further configured to receive a first neighboring cell measurement set request sent by the terminal device; or the sending unit 1110 is further configured to send a first neighboring cell measurement set request to a positioning server; and the receiving unit is further configured to receive the first neighboring cell measurement set sent by the positioning server.

Optionally, the first neighboring cell measurement set includes an ID of a second communications device, and the second communications device includes at least one of the following: a neighboring cell base station, a TRP, or a roadside unit.

Optionally, the second communications device further includes a base station of a serving cell in which the terminal device is located, and the first neighboring cell measurement set further includes at least one of the following information: a signal measurement quantity that needs to be measured by the terminal device; an SSB sequence number of the second communications device; a beam direction of the terminal device relative to the second communications device; a transmit beam direction of the second communications device relative to the terminal device; a receive beam direction of the second communications device relative to the terminal device; a working frequency of a pilot signal that needs to be measured by the second communications device; a bandwidth of a pilot signal that needs to be measured by the second communications device; a sending time of a pilot signal that needs to be measured by the second communications device; or a sending start time instant of a pilot signal that needs to be measured by the second communications device.

Optionally, the first location measurement information includes at least one of the following information: an SSB sequence number corresponding to the terminal device; a signal measurement quantity corresponding to the terminal device; a coarse location of the terminal device; a reference location of the terminal device; or a TA corresponding to the terminal device.

Optionally, the signal measurement quantity includes one or more of the following: an RSRP, a single-path RSRP, or an RSSI.

Optionally, the receiving unit is further configured to receive a positioning service request sent by a network side or the terminal device.

Optionally, the first neighboring cell measurement set is determined based on a serving cell in which the terminal device is located, the first neighboring cell measurement set includes a plurality of second neighboring cell measurement sets, and the plurality of second neighboring cell measurement sets are associated with different parameters of positioning association information.

Optionally, the positioning association information is used for determining a second neighboring cell measurement set corresponding to the terminal device in the plurality of second neighboring cell measurement sets, and the positioning association information includes one or more of the following: an SSB sequence number; a signal measurement quantity corresponding to the serving cell; an angle of arrival measured by a base station of the serving cell; a sub-zone of the serving cell; or a TA measured by a base station of the serving cell.

Optionally, the first communications device is a base station, and the receiving unit is further configured to receive a notification from a positioning server, where the notification is used to indicate the first neighboring cell measurement set; or the receiving unit is further configured to receive a notification sent by a positioning server by using NRPPa signalling, where the notification is used to indicate the first neighboring cell measurement set.

Optionally, the first communications device is a base station. For sending the first neighboring cell measurement set, the sending unit 1110 is configured to: notify the terminal device of the first neighboring cell measurement set through broadcasting; or notify the terminal device of the first neighboring cell measurement set by using RRC signalling.

Optionally, the first location measurement information includes reference positioning information of the terminal device, the reference positioning information includes a reference location, the terminal device is one of M terminal devices corresponding to the base station, and M is an integer greater than or equal to 1. If a reference location of the M terminal devices and a location of the base station satisfy following an indicated by the following formula, it is determined that the location of the base station is valid; otherwise, it is determined that the location of the base station is invalid:

$$\frac{\sum_{n=1}^{M}\left(\sqrt{(x_n - u)^2 + (y_n - v)^2}\, 10^{\frac{P_n - P_{ref}}{20N}}\right)}{\sqrt{\left\{\sum_{n=1}^{M}\left[(x_n - u)^2 + (y_n - v)^2\right]\right\}\left\{\sum_{n=1}^{M}\left(10^{\frac{p_n - P_{ref}}{10N}}\right)\right\}}} > c;$$

or

$$\frac{\sum_{n=1}^{M}\left(\sqrt{(x_n - u)^2 + (y_n - v)^2}\, 10^{\frac{P_n - P_{ref}}{20N}}\right)}{\sqrt{\left\{\sum_{n=1}^{M}\left[(x_n - u)^2 + (y_n - v)^2\right]\right\}\left\{\sum_{n=1}^{M}\left(10^{\frac{p_n - P_{ref}}{10N}}\right)\right\}}} \geq c,$$

where

where $(x_n, y_n)$ represents a reference location of a terminal device n, n is an integer from 1 to M, (u, v) represents a location of the base station, $P_n$ represents a measured path loss from the terminal device n to the base station, $P_{ref}$ represents a reference path loss of one meter, N represents a fitting factor, and c represents a preset threshold.

Optionally, the first location measurement information is associated with the location of the base station. The sending unit 1110 is further configured to: if the first communications device determines that the location of the base station needs to be updated, send, by the first communications device, a location update request of the base station to the base station or a network side. The receiving unit is further configured to receive an updated location of the base station from the base station or the network side.

FIG. 12 is a schematic block diagram of another positioning apparatus according to an embodiment of the present application. The positioning apparatus may be any terminal device described above. The apparatus 1200 shown in FIG. 12 includes a receiving unit 1210.

The receiving unit 1210 may be configured to receive a first neighboring cell measurement set sent by a first communications device, where a measurement result of the first neighboring cell measurement set is used for positioning a terminal device.

Optionally, the receiving unit 1210 is further configured to receive a reqesut for obtaining first location measurement information of the terminal device, sent by the first communications device , where the first location measurement information is used for determining the first neighboring cell measurement set; and/or, the apparatus 1200 further includes: a sending unit, reporting first location measurement information of the terminal device to the first communications device, where the first location measurement information is used for determining the first neighboring cell measurement set.

Optionally, the sending unit is further configured to send a first neighboring cell measurement set request to the first communications device.

Optionally, the first neighboring cell measurement set includes an ID of a second communications device, and the second communications device includes at least one of the following: a neighboring cell base station, a TRP, or a roadside unit.

Optionally, the second communications device further includes a base station of a serving cell in which the terminal device is located, and the first neighboring cell measurement set further includes at least one of the following information: a signal measurement quantity that needs to be measured by the terminal device; an SSB sequence number of the second communications device; a beam direction of the terminal device relative to the second communications device; a transmit beam direction of the second communications device relative to the terminal device; a receive beam direction of the second communications device relative to the terminal device; a working frequency of a pilot signal that needs to be measured by the second communications device; a bandwidth of a pilot signal that needs to be measured by the second communications device; a sending time of a pilot signal that needs to be measured by the second communications device; or a sending start time instant of a pilot signal that needs to be measured by the second communications device.

Optionally, the first location measurement information includes at least one of the following information: an SSB sequence number corresponding to the terminal device; a signal measurement quantity corresponding to the terminal device; a coarse location of the terminal device; a reference location of the terminal device; or a TA corresponding to the terminal device.

Optionally, the signal measurement quantity includes one or more of the following: an RSRP, a single-path RSRP, or an RSSI.

Optionally, the sending unit is further configured to send a positioning service request to the first communications device.

Optionally, the first neighboring cell measurement set is determined based on a serving cell in which the terminal device is located, the first neighboring cell measurement set includes a plurality of second neighboring cell measurement sets, and the plurality of second neighboring cell measurement sets are associated with different parameters of positioning association information.

Optionally, the positioning association information is used for determining a second neighboring cell measurement set corresponding to the terminal device in the plurality of second neighboring cell measurement sets, and the positioning association information includes one or more of the following: an SSB sequence number; a signal measurement quantity corresponding to the serving cell; an angle of arrival measured by a base station of the serving cell; a subzone of the serving cell; or a TA measured by a base station of the serving cell.

Optionally, the apparatus 1200 further includes: a selection unit, selecting, based on the positioning association information, a second neighboring cell measurement set corresponding to the terminal device from the plurality of second neighboring cell measurement sets. The apparatus 1200 further includes: a measurement unit, performing signal measurement on some or all second communications devices in the second neighboring cell measurement set corresponding to the terminal device.

Optionally, the first communications device is a base station. For receiving the first neighboring cell measurement set, the receiving unit 1210 is configured to: receive the first neighboring cell measurement set through broadcasting, or receive the first neighboring cell measurement set by using RRC signalling.

Optionally, the first location measurement information includes reference positioning information of the terminal device, the reference positioning information includes a reference location, the terminal device is one of M terminal devices corresponding to the base station, and M is an integer greater than or equal to 1. If a reference location of the M terminal devices and a location of the base station satisfy a condition indicated by the following formula, it is determined that the location of the base station is valid; otherwise, it is determined that the location of the base station is invalid:

$$\frac{\sum_{n=1}^{M}\left(\sqrt{(x_n-u)^2+(y_n-v)^2}\,10^{\frac{P_n-P_{ref}}{20N}}\right)}{\sqrt{\left\{\sum_{n=1}^{M}\left[(x_n-u)^2+(y_n-v)^2\right]\right\}\left\{\sum_{n=1}^{M}\left(10^{\frac{p_n-P_{ref}}{10N}}\right)\right\}}} > c;$$

or

$$\frac{\sum_{n=1}^{M}\left(\sqrt{(x_n-u)^2+(y_n-v)^2}\,10^{\frac{P_n-P_{ref}}{20N}}\right)}{\sqrt{\left\{\sum_{n=1}^{M}\left[(x_n-u)^2+(y_n-v)^2\right]\right\}\left\{\sum_{n=1}^{M}\left(10^{\frac{p_n-P_{ref}}{10N}}\right)\right\}}} \geq c,$$

where

where $(x_n, y_n)$ represents a reference location of a terminal device n, n is an integer from 1 to M, (u, v) represents a location of the base station, $P_n$ represents a measured path loss from the terminal device n to the base station, $P_{ref}$ represents a reference path loss of one meter, N represents a fitting factor, and c represents a preset threshold.

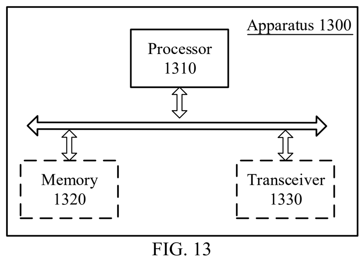

FIG. 13 is a schematic diagram of a structure of a communications apparatus according to an embodiment of the present application. Dashed lines in FIG. 13 indicate that units or modules are optional. The apparatus 1300 may be configured to implement the methods described in the foregoing method embodiments. The apparatus 1300 may be a chip, or the foregoing positioning device, terminal device, and network device.

The apparatus 1300 may include one or more processors 1310. The processor 1310 may support the apparatus 1300 in implementing the methods described in the foregoing method embodiments. The processor 1310 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. A general-purpose processor may be a microprocessor, or the processor may also be any conventional processor or the like.

The apparatus 1300 may further include one or more memories 1320. The memory 1320 stores a program. The program may be executed by the processor 1310, so that the processor 1310 performs the methods described in the foregoing method embodiments. The memory 1320 may be independent of the processor 1310 or may be integrated into the processor 1310.

The apparatus 1300 may further include a transceiver 1330. The processor 1310 may communicate with another device or chip through the transceiver 1330. For example, the processor 1310 may send data to and receive data from another device or chip through the transceiver 1330.

An embodiment of the present application further provides a computer-readable storage medium for storing a program. The computer-readable storage medium may be used in the auxiliary positioning device, the to-be-detected device, or the network-side device provided in embodiments of the present application. The program causes a computer to perform the methods to be performed by the auxiliary positioning device, the to-be-detected device, or the network-side device in various embodiments of the present application.

It should be understood that the computer-readable storage medium mentioned in this embodiment of the present application may be any usable medium readable by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

An embodiment of the present application further provides a computer program product. The computer program product includes a program. The computer program product may be used in the auxiliary positioning device, the to-be-detected device, or the network-side device provided in embodiments of the present application. The program causes a computer to perform the methods to be performed by the auxiliary positioning device, the to-be-detected device, or the network-side device in various embodiments of the present application.

All or some of the foregoing embodiments may be implemented by software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, all or some procedures or functions in embodiments of the present application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner.

An embodiment of the present application further provides a computer program. The computer program may be used in the auxiliary positioning device, the to-be-detected device, or the network-side device provided in embodiments of the present application. The program causes a computer to perform the methods to be performed by the auxiliary positioning device, the to-be-detected device, or the network-side device in various embodiments of the present application.

The terms "system" and "network" in the present application may be used interchangeably. In addition, the terms used in the present application are merely used to explain the specific embodiments of the present application, and are not intended to limit the present application. In the specification, claims, and accompanying drawings of the present application, the terms "first", "second", "third", "fourth", and the like are intended to distinguish between different objects but do not indicate a particular order. In addition, the terms "include" and "have" and any other variants thereof are intended to cover a non-exclusive inclusion.

In embodiments of the present application, "indicate" mentioned herein may indicate a direct indication, or may indicate an indirect indication, or may indicate that there is an association. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association between A and B.

In embodiments of the present application, the term "correspond" may indicate that there is a direct or indirect correspondence between the two, or may indicate that there is an association between the two, which may also be a relationship such as indicating and being indicated, or configuring and being configured.

In embodiments of the present application, "pre-configured" may be implemented by pre-storing corresponding codes, tables, or other forms that can be used to indicate related information in the device. A specific implementation thereof is not limited in the present application.

In embodiments of the present application, the "protocol" may indicate a standard protocol in the communication field, and may include, for example, an LTE protocol, an NR protocol, and a related protocol applied to a future communication system. This is not limited in the present application.

In embodiments of the present application, determining B based on A does not mean determining B based on only A, but instead B may be determined based on A and/or other information.

In embodiments of the present application, the term "and/or" is merely an association that describes associated objects, and represents that there may be three relationships. For example, A and/or B may represent three cases: only A exists, both A and B exist, and only B exists. In addition, the character "/" in this specification usually indicates an "or" relationship between the associated objects.

In embodiments of the present application, sequence numbers of the foregoing processes do not mean execution sequences. The execution sequences of the processes should be determined according to functions and internal logic of the processes, and should not be construed as any limitation on the implementation processes of the embodiments of the present application.

In several embodiments provided in the present application, it should be understood that, the disclosed system, apparatus, and method may be implemented in other manners. For example, the foregoing described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may or may not be physically separate, and parts displayed as units may or may not be physical units, and may be located at one position, or may be distributed on a plurality of network units. Some or all of the units may be selected according to actual requirements to achieve the objectives of the solutions of embodiments.

In addition, functional units in embodiments of the present application may be integrated into one processing unit, each of the units may exist alone physically, or two or more units are integrated into one unit.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subject to the protection scope of the claims.

**Claims**

**1.** A positioning method, comprising:
sending, by a first communications device, a first neighboring cell measurement set to a terminal device, wherein a measurement result of the first neighboring cell measurement set is used for positioning the terminal device.

**2.** The positioning method according to claim 1, wherein the first communications device is a positioning server, and before the sending, by a first communications device, a first neighboring cell measurement set to a terminal device, the method further comprises:

sending, by the first communications device, a request for obtaining first location measurement information of the terminal device, to a base station and/or the terminal device, wherein the first location measurement information is used for determining the first neighboring cell measurement set; and/or

receiving, by the first communications device, first location measurement information of the terminal device, reported by the terminal device or a base station; and

determining, by the first communications device, the first neighboring cell measurement set based on the received first location measurement information.

3. The positioning method according to claim 1, wherein the first communications device is a base station, and before the sending, by a first communications device, a first neighboring cell measurement set to a terminal device, the method further comprises:

sending, by the first communications device, a request for obtaining first location measurement information of the terminal device, to the terminal device or a positioning server, wherein the first location measurement information is used for determining the first neighboring cell measurement set; and/or

receiving, by the first communications device, first location measurement information of the terminal device, reported by the terminal device or sent by a positioning server; and

determining, by the first communications device, the first neighboring cell measurement set based on the received first location measurement information.

4. The positioning method according to claim 1, wherein the first communications device is a positioning server, and before the sending, by a first communications device, a first neighboring cell measurement set to a terminal device, the method further comprises:

receiving, by the first communications device, a first neighboring cell measurement set request sent by the terminal device; or

receiving, by the first communications device, the first neighboring cell measurement set request sent by a base station; and

sending, by the first communications device, the first neighboring cell measurement set to the base station.

5. The positioning method according to claim 1, wherein the first communications device is a base station, and before the sending, by a first communications device, a first neighboring cell measurement set to a terminal device, the method further comprises:

receiving, by the first communications device, a first neighboring cell measurement set request sent by the terminal device; or,

sending, by the first communications device, the first neighboring cell measurement set request to a positioning server; and

receiving, by the first communications device, the first neighboring cell measurement set sent by the positioning server.

6. The positioning method according to claim 1, wherein the first neighboring cell measurement set comprises an identity ID of a second communications device, and the second communications device comprises at least one of following: a neighboring cell base station, a transmitting and receiving point TRP, or a roadside unit.

7. The positioning method according to claim 6, wherein the second communications device further comprises a base station of a serving cell in which the terminal device is located, and the first neighboring cell measurement set further comprises at least one of following information:

a signal measurement quantity that is to be measured by the terminal device;
a synchronization signal block SSB sequence number of the second communications device;

a beam direction of the terminal device relative to the second communications device;

a transmit beam direction of the second communications device relative to the terminal device;

a receive beam direction of the second communications device relative to the terminal device;

a working frequency of a pilot signal that is to be measured by the second communications device;

a bandwidth of a pilot signal and that is to be measured by the second communications device;

a sending time of a pilot signal that is to be measured by the second communications device; or

a sending start time that is of a pilot signal and that needs to be measured by the second communications device.

8. The positioning method according to claim 2, wherein the first location measurement information comprises at least one of following information:

an SSB sequence number corresponding to the terminal device;

a signal measurement quantity corresponding to the terminal device;

a coarse location of the terminal device;

a reference location of the terminal device; or

a timing advance TA corresponding to the terminal device.

9. The positioning method according to claim 7 or 8, wherein the signal measurement quantity comprises one or more of: a reference signal received power RSRP, a single-path RSRP, or a received signal strength indicator RSSI.

10. The positioning method according to claim 2, wherein before the sending, by the first communications device, a request for obtaining first location measurement information of the terminal device, to a base station and/or the terminal device, the method further comprises:
receiving, by the first communications device, a positioning service request sent by a network side or the terminal device.

11. The positioning method according to claim 1, wherein before the sending, by a first communications device, a first neighboring cell measurement set to a terminal device, the method further comprises:
receiving, by the first communications device, a positioning service request sent by a network side or the terminal device.

12. The positioning method according to claim 1, wherein the first neighboring cell measurement set is determined based on a serving cell in which the terminal device is located, the first neighboring cell measurement set comprises a plurality of second neighboring cell measurement sets, and the plurality of second neighboring cell measurement sets are associated with different parameters of positioning association information.

13. The positioning method according to claim 12, wherein the positioning association information is used for determining a second neighboring cell measurement set corresponding to the terminal device in the plurality of second neighboring cell measurement sets, and the positioning association information comprises one or more of following:

an SSB sequence number;

a signal measurement quantity corresponding to the serving cell;

an angle of arrival measured by a base station of the serving cell;

a sub-zone of the serving cell; or

a TA measured by a base station of the serving cell.

14. The positioning method according to claim 1, wherein the first communications device is a base station, and before the sending, by a first communications device, a first neighboring cell measurement set to a terminal device, the method further comprises:

receiving, by the first communications device, a notification from a positioning server, wherein the notification is used to indicate the first neighboring cell measurement set;
or,
receiving, by the first communications device, a notification sent by a positioning server by using new radio positioning protocol NRPPa signalling, wherein the notification is used to indicate the first neighboring cell measurement set.

15. The positioning method according to claim 1, wherein the first communications device is a base station, and the sending, by a first communications device, a first neighboring cell measurement set to a terminal device comprises at least one of following:

notifying, by the first communications device, the terminal device of the first neighboring cell measurement set through broadcasting; or
notifying, by the first communications device, the terminal device of the first neighboring cell measurement set by using RRC signalling.

16. The positioning method according to claim 2, wherein the first location measurement information comprises reference positioning information of the terminal device, the reference positioning information comprises a reference location, the terminal device is one of M terminal devices corresponding to the base station, and M is an integer greater than or equal to 1; and if a reference location of the M terminal devices and a location of the base station satisfy following formula, it is determed that the location of the base station is valid; or if a reference location of the M terminal devices and a location of the base station fail to satisfy following formula, it is determined that the location of the base station is invalid:

$$\frac{\sum_{n=1}^{M}\left(\sqrt{(x_n-u)^2+(y_n-v)^2}\,10^{\frac{P_n-P_{ref}}{20N}}\right)}{\sqrt{\left\{\sum_{n=1}^{M}\left[(x_n-u)^2+(y_n-v)^2\right]\right\}\left\{\sum_{n=1}^{M}\left(10^{\frac{p_n-P_{ref}}{10N}}\right)\right\}}} > c;$$

or

$$\frac{\sum_{n=1}^{M}\left(\sqrt{(x_n-u)^2+(y_n-v)^2}\,10^{\frac{P_n-P_{ref}}{20N}}\right)}{\sqrt{\left\{\sum_{n=1}^{M}\left[(x_n-u)^2+(y_n-v)^2\right]\right\}\left\{\sum_{n=1}^{M}\left(10^{\frac{p_n-P_{ref}}{10N}}\right)\right\}}} \geq c,$$

wherein
$(x_n, y_n)$ represents a reference location of a terminal device n, n is an integer from 1 to M, $(u, v)$ represents a location of the base station, $P_n$ represents a measured path loss from the terminal device n to the base station, $P_{ref}$ represents a reference path loss of one meter, N represents a fitting factor, and c represents a preset threshold.

17. The positioning method according to claim 2, wherein the first location measurement information is associated with a location of the base station, and the method further comprises:

if the first communications device determines that the location of the base station is to be updated, sending, by the first communications device, a location update request of the base station to the base station or a network side; and
receiving, by the first communications device, an updated location of the base station from the base station or the network side.

18. A positioning method, comprising:
receiving, by a terminal device, a first neighboring cell measurement set sent by a first communications device, wherein a measurement result of the first neighboring cell measurement set is used for positioning the terminal device.

19. The positioning method according to claim 18, wherein before the receiving, by a terminal device, a first neighboring cell measurement set sent by a first communications device, the method further comprises:

receiving, by the terminal device, a request for obtaining first location measurement information of the terminal device, sent by the first communications device, wherein the first location measurement information is used for determining the first neighboring cell measurement set;
and/or,
reporting, by the terminal device, first location measurement information of the terminal device to the first communications device, wherein the first location measurement information is used for determining the first neighboring cell measurement set.

20. The positioning method according to claim 18, wherein before the receiving, by a terminal device, a first neighboring cell measurement set sent by a first communications device, the method further comprises: sending, by the terminal device, a first neighboring cell measurement set request to the first communications device.

21. The positioning method according to claim 18, wherein the first neighboring cell measurement set comprises an identity ID of a second communications device, and the second communications device comprises at least one of following: a neighboring cell base station, a transmitting and receiving point TRP, or a roadside unit.

22. The positioning method according to claim 21, wherein the second communications device further comprises a base station of a serving cell in which the terminal device is located, and the first neighboring cell measurement set further comprises at least one of following information:

a signal measurement quantity that is to be measured by the terminal device;
a synchronization signal block SSB sequence number of the second communications device;
a beam direction of the terminal device relative to the second communications device;
a transmit beam direction of the second communications device relative to the terminal device;
a receive beam direction of the second communications device relative to the terminal device;
a working frequency of a pilot signal that is to be measured by the second communications device;
a bandwidth of a pilot signal that is to be measured by the second communications device;
a sending time of a pilot signal that is to be measured by the second communications device; or
a sending start time instant of a pilot signal that is to be measured by the second communications device.

23. The positioning method according to claim 19, wherein the first location measurement information comprises at least one of following information:

an SSB sequence number corresponding to the terminal device;
a signal measurement quantity corresponding to the terminal device;
a coarse location of the terminal device;
a reference location of the terminal device; or
a timing advance TA corresponding to the terminal device.

24. The positioning method according to claim 22 or 23, wherein the signal measurement quantity comprises one or more of following: a reference signal received power RSRP, a single-path RSRP, or a received signal strength indicator RSSI.

25. The positioning method according to claim 19, wherein before the receiving, by the terminal device, a rqeust for obtaining first location measurement information of the terminal device, sent by the first communications device, the method further comprises: sending, by the terminal device, a positioning service request to the first communications device.

26. The positioning method according to claim 18, wherein before the receiving, by a terminal device, a first neighboring cell measurement set sent by a first communications device, the method further comprises: sending, by the terminal device, a positioning service request to the first communications device.

27. The positioning method according to claim 18, wherein the first neighboring cell measurement set is determined based on a serving cell in which the terminal device is located, the first neighboring cell measurement set comprises a plurality of second neighboring cell measurement sets, and the plurality of second neighboring cell measurement sets are associated with different parameters of positioning association information.

28. The positioning method according to claim 27, wherein the positioning association information is used for determining a second neighboring cell measurement set corresponding to the terminal device in the plurality of second neighboring cell measurement sets, and the positioning association information comprises one or more of following:

an SSB sequence number;
a signal measurement quantity corresponding to the serving cell;
an angle of arrival measured by a base station of the serving cell;

a sub-zone of the serving cell; or
a TA measured by a base station of the serving cell.

**29.** The positioning method according to claim 27, wherein after the receiving, by a terminal device, a first neighboring cell measurement set sent by a first communications device, the method further comprises:

selecting, based on the positioning association information, a second neighboring cell measurement set corresponding to the terminal device from the plurality of second neighboring cell measurement sets; and performing signal measurement on some or all second communications devices in the second neighboring cell measurement set corresponding to the terminal device.

**30.** The positioning method according to claim 18, wherein the first communications device is a base station, and the receiving, by a terminal device, a first neighboring cell measurement set sent by a first communications device comprises at least one of following:

receiving, by the terminal device, the first neighboring cell measurement set through broadcasting; or
receiving, by the terminal device, the first neighboring cell measurement set by using RRC signalling.

**31.** The positioning method according to claim 19, wherein the first location measurement information comprises reference positioning information of the terminal device, the reference positioning information comprises a reference location, the terminal device is one of M terminal devices corresponding to the base station, and M is an integer greater than or equal to 1; and if a reference location of the M terminal devices and a location of the base station satisfy following formula, it is determined that the location of the base station is valid; or if a reference location of the M terminal devices and a location of the base station fail to satisfy following formula, it is determined that the location of the base station is invalid:

$$\frac{\sum_{n=1}^{M}\left(\sqrt{(x_n-u)^2+(y_n-v)^2}\, 10^{\frac{P_n-P_{ref}}{20N}}\right)}{\sqrt{\left\{\sum_{n=1}^{M}\left[(x_n-u)^2+(y_n-v)^2\right]\right\}\left\{\sum_{n=1}^{M}\left(10^{\frac{p_n-P_{ref}}{10N}}\right)\right\}}} > c;$$

or

$$\frac{\sum_{n=1}^{M}\left(\sqrt{(x_n-u)^2+(y_n-v)^2}\, 10^{\frac{P_n-P_{ref}}{20N}}\right)}{\sqrt{\left\{\sum_{n=1}^{M}\left[(x_n-u)^2+(y_n-v)^2\right]\right\}\left\{\sum_{n=1}^{M}\left(10^{\frac{p_n-P_{ref}}{10N}}\right)\right\}}} \geq c,$$

wherein
$(x_n, y_n)$ represents a reference location of a terminal device n, n is an integer from 1 to M, $(u, v)$ represents a location of the base station, $P_n$ represents a measured path loss from the terminal device n to the base station, $P_{ref}$ represents a reference path loss of one meter, N represents a fitting factor, and c represents a preset threshold.

**32.** A positioning apparatus, wherein the positioning apparatus is a first communications device, and the first communications device comprises:
a sending unit, sending a first neighboring cell measurement set to a terminal device, wherein a measurement result of the first neighboring cell measurement set is used for positioning the terminal device.

**33.** A positioning apparatus, wherein the positioning apparatus is a terminal device, and the terminal device comprises:
a receiving unit, receiving a first neighboring cell measurement set sent by a first communications device, wherein a measurement result of the first neighboring cell measurement set is used for positioning the terminal device.

**34.** A communications apparatus, comprising a memory and a processor, wherein the memory is configured to store a program, and the processor is configured to invoke the program in the memory to perform the method according to any one of claims 1 to 31.

**35.** A communications apparatus, comprising a processor invoking a program from a memory to perform the method according to any one of claims 1 to 31.

**36.** A chip, comprising a processor invoking a program from a memory to cause a device installed with the chip to perform the method according to any one of claims 1 to 31.

**37.** A computer-readable storage medium, wherein the computer-readable storage medium stores a program, and the program causes a computer to perform the method according to any one of claims 1 to 31.

**38.** A computer program product, comprising a program, wherein the program causes a computer to perform the method according to any one of claims 1 to 31.

**39.** A computer program, wherein the computer program causes a computer to perform the method according to any one of claims 1 to 31.

**100**

FIG. 1

**200**

FIG. 2

Location of a base station

FIG. 3

FIG. 4

FIG. 5

```
┌──────────────┐                          ┌──────────────┐
│    First     │                          │   Terminal   │
│communications│                          │    device    │
│    device    │                          └──────┬───────┘
└──────┬───────┘                                 │
       │   S610: First neighboring cell          │
       │        measurement set                  │
       │ ──────────────────────────────────────► │
       │                                         │
```

FIG. 6

```
┌──────────────┐                          ┌──────────────┐
│ Positioning  │                          │   Terminal   │
│    server    │                          │    device    │
└──────┬───────┘                          └──────┬───────┘
       │    S710: Positioning service request    │
       │ ◄────────────────────────────────────── │
       │    S720: RSRP reporting request         │
       │ ──────────────────────────────────────► │
       │       S730: Report an RSRP              │
       │ ◄────────────────────────────────────── │
┌──────┴───────────────────────┐                 │
│ S740: Determining a base      │                │
│ station on which RSRP         │                │
│ measurement needs to be       │                │
│ performed                     │                │
└──────┬───────────────────────┘                 │
       │    S750: Neighboring cell               │
       │         measurement list                │
       │ ──────────────────────────────────────► │
```

FIG. 7

```
┌──────────────┐                          ┌──────────────┐
│ Positioning  │                          │   Terminal   │
│    server    │                          │    device    │
└──────┬───────┘                          └──────┬───────┘
┌──────┴────────────────────────┐                │
│ S810: Determining a terminal   │               │
│ device that needs to be        │               │
│ positioned                     │               │
├───────────────────────────────┤               │
│ S820: Determining a neighboring│               │
│ cell base station on which the │               │
│ terminal device needs to       │               │
│ perform measurement and        │               │
│ reporting                      │               │
└──────┬────────────────────────┘               │
       │ S830: The neighboring cell base         │
       │ station on which measurement            │
       │ needs to be performed                   │
       │ ──────────────────────────────────────► │
```

FIG. 8

```
┌─────────────┐                          ┌─────────────┐
│ Base station│                          │  Terminal   │
│             │                          │   device    │
└──────┬──────┘                          └──────┬──────┘
       │                                        │
┌──────┴──────────────────────────────┐         │
│ S910: Determining a neighboring cell │         │
│ measurement list for positioning in  │         │
│               the cell               │         │
└──────┬──────────────────────────────┘         │
       │                                        │
┌──────┴──────────────────────────────┐         │
│ S920: Notifying the neighboring cell │         │
│ measurement list through broadcasting│         │
└──────┬──────────────────────────────┘         │
       │         S930: Report an RSRP           │
       │◄───────────────────────────────────────│
       │                                        │
┌ ─ ─ ─┴─ ─ ─ ─ ─ ─ ─ ─ ─ ─ ─ ─ ─ ─ ─ ─ ┐      │
│ S940: Transmitting transparently the   │      │
│       RSRP to a positioning server     │      │
└ ─ ─ ─┬─ ─ ─ ─ ─ ─ ─ ─ ─ ─ ─ ─ ─ ─ ─ ─ ┘      │
       │                                        │
```

FIG. 9

```
┌─────────────┐                          ┌─────────────┐
│ Base station│                          │  Terminal   │
│             │                          │   device    │
└──────┬──────┘                          └──────┬──────┘
       │     S1010: Positioning service         │
       │                request                 │
       │◄───────────────────────────────────────│
       │     S1020: Neighboring cell            │
       │          measurement list              │
       │───────────────────────────────────────►│
       │       S1030: Report an RSRP            │
       │◄───────────────────────────────────────│
┌ ─ ─ ─┴─ ─ ─ ─ ─ ─ ─ ─ ─ ─ ─ ─ ─ ─ ─ ─ ┐      │
│ S1040: Transmitting transparently      │      │
│   the RSRP to a positioning server     │      │
└ ─ ─ ─┬─ ─ ─ ─ ─ ─ ─ ─ ─ ─ ─ ─ ─ ─ ─ ─ ┘      │
       │                                        │
```

FIG. 10

```
┌─────────────────────────────────────┐
│          Apparatus 1100             │
│  ┌───────────────────────────────┐  │
│  │      Sending unit 1110        │  │
│  └───────────────────────────────┘  │
└─────────────────────────────────────┘
```

FIG. 11

```
┌─────────────────────────────────────┐
│          Apparatus 1200             │
│  ┌───────────────────────────────┐  │
│  │     Receiving unit 1210       │  │
│  └───────────────────────────────┘  │
└─────────────────────────────────────┘
```

FIG. 12

FIG. 13

# EP 4 645 974 A1

## INTERNATIONAL SEARCH REPORT

| | International application No. |
|---|---|
| | **PCT/CN2023/082042** |

**A. CLASSIFICATION OF SUBJECT MATTER**

H04W64/00(2009.01)i; H04W24/00(2009.01)i; H04L5/00(2006.01)i

According to International Patent Classification (IPC) or to both national classification and IPC

**B. FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, CNKI, WPABS, ENTXTC, 3GPP: 邻区, 相邻小区, 测量, 集合, 位置, 定位, 请求, 参考信号, 服务器; adjacent, next, cell, measure, sounding, reference, signal, RS, set, location, position, request, server

**C. DOCUMENTS CONSIDERED TO BE RELEVANT**

| Category* | Citation of document, with indication, where appropriate, of the relevant passages | Relevant to claim No. |
|---|---|---|
| X | CN 114205864 A (UNISOC (CHONGQING) TECHNOLOGY CO., LTD.) 18 March 2022 (2022-03-18) description, paragraphs 0051-0090, and claims 1-11 | 1-39 |
| X | CN 107241795 A (SPREADTRUM COMMUNICATIONS (SHANGHAI) CO., LTD.) 10 October 2017 (2017-10-10) claims 1-12 | 1-39 |
| A | WO 2022165825 A1 (HUAWEI TECHNOLOGIES CO., LTD.) 11 August 2022 (2022-08-11) entire document | 1-39 |
| A | CN 111246565 A (CHINA MOBILE COMMUNICATIONS CO., LTD. RESEARCH INSTITUTE et al.) 05 June 2020 (2020-06-05) entire document | 1-39 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 September 2023** | **14 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/082042** |

| Patent document<br>cited in search report | | | Publication date<br>(day/month/year) | Patent family member(s) | Publication date<br>(day/month/year) |
| --- | --- | --- | --- | --- | --- |
| CN | 114205864 | A | 18 March 2022 | None | |
| CN | 107241795 | A | 10 October 2017 | None | |
| WO | 2022165825 | A1 | 11 August 2022 | None | |
| CN | 111246565 | A | 05 June 2020 | None | |

Form PCT/ISA/210 (patent family annex) (July 2022)

**EP 4 645 974 A1**

**Patent documents cited in the description**

- CN 2022116882247